Europäisches Patentamt

European Patent Office

Office européen des brevets

(11) Veröffentlichungsnummer: **0 626 584 A1**

## (12) EUROPÄISCHE PATENTANMELDUNG

(21) Anmeldenummer: **94101697.4**

(22) Anmeldetag: **04.02.94**

(51) Int. Cl.5: **G01R 27/14**, G01N 27/04,
G01N 33/24

(30) Priorität: **09.03.93 DE 4307379**

(43) Veröffentlichungstag der Anmeldung:
**30.11.94 Patentblatt 94/48**

(84) Benannte Vertragsstaaten:
**CH DE FR GB IT LI SE**

(71) Anmelder: **GSF-Forschungszentrum für
Umwelt und Gesundheit, GmbH
Ingolstädter Landstrasse 1
D-85764 Oberschleissheim (DE)**

(72) Erfinder: **Yaramanci, Ugur, Dr.
Siebensternweg 13
D-38678 Clausthal-Zellerfeld (DE)**
Erfinder: **Miehe, Rüdiger, Dr.
Kolberger Strasse 3a
D-38685 Langelsheim (DE)**
Erfinder: **Stockmann, Norbert, Dr.
Kreuzallee 21
D-38685 Langelsheim (DE)**
Erfinder: **Glötzl, Franz
Bienwaldstrasse 10
D-76287 Rheinstetten (DE)**
Erfinder: **Roller, Leonhard
Douglasstrasse 10
D-76437 Rastatt (DE)**

(54) **Sensor und Verfahren zur Erfassung der elektrischen Leitfähigkeit.**

㉗ Die Erfindung betrifft einen Sensor und ein Verfahren zur Leitfähigkeitsmessung.

Aufgabe der Erfindung ist es die Messung der lokalen Leitfähigkeit im Gebirge und in Bauwerken über sieben Größenordnungen zu ermöglichen.

Gelöst wird diese Aufgabe durch eine Anordnung mit vier kugelförmigen Elektroden mit 2 cm Durchmesser und je 10 cm Abstand, wobei auf zwei Elektroden ein niederfrequenter Wechselstrom aufgeprägt wird und wobei die an den beiden anderen Elektroden anliegende Spannung stromlos gemessen wird.

Die Erfindung betrifft einen Sensor und ein Verfahren zur Erfassung der elektrischen Leitfähigkeit.

Die elektrische Leitfähigkeit eines Gesteins oder eines Baumaterials ist im wesentlichen von dem in dem Porenraum befindlichen Wasser bzw. Lauge (Elektrolyt) abhängig, sofern keine metallischen Beimengungen vorhanden sind. Durch die Messung der Leitfähigkeiten und durch die Kenntnis der Leitfähigkeit des Porenelektrolyts kann die Menge des Elektrolyts und somit der Durchfeuchtungsgrad eines Gebirgsbereiches oder Baumaterials bestimmt werden.

Es gibt eine Reihe bekannter Verfahren und Möglichkeiten, wodurch der elektrische Leitwert (inverser Widerstand) gemessen werden kann. Dieser Wert beinhaltet aber zum größten Teil Übergangswiderstände und ist auch von der Meßgeometrie abhän-` gig und daher nur bedingt als Anzeige des eigentlichen Materialgrundparameters, der elektrischen Leitfähigkeit, brauchbar.

Aus W. H. Telford et al., Applied Geophysics Cambridge, 1976, Seite 654 bis 661 sind Elektrodenanordnungen bekannt, mit denen die Leitfähigkeit (inverser spezifischer Widerstand) bei Feldmessungen von der Oberflächen aus gemessen wird. Die da beschriebenen Anordnungen lassen sich nicht beliebig verkleinern, da die Elektroden für die Auswertung der Messungen punktförmig sein sollen. Der Meßbereich ist dabei auf etwa 2 Zehnerpotenzen beschränkt.

Aus der US 3,924,175 ist eine Mehrelektroden-Anordnung zur Messung der Leitfähigkeit von Elektrolyten bekannt. Zur Messung der Leitfähigkeit in festem Material ist diese Vorrichtung jedoch nicht geeignet.

Aufgabe der Erfindung ist es einen Sensor und ein Verfahren der e. g. Art zur Verfügung zu stellen, mit denen die lokale elektrische Leitfähigkeit im Gebirge und in Bauwerken über sieben Größenordnungen gemessen werden kann.

Gelöst wird diese Aufgabe durch die kennzeichnenden Merkmale der Patentansprüche 1 und 6. Die Unteransprüche 2 bis 5 beschreiben vorteilhafte Ausgestaltungen des Sensors.

Ein weiterer Vorteil dieses 4-Elektroden-Sensors besteht darin, daß über eine Reziprok-Messung die korrekte Funktion des Sensors überprüft werden kann.

Das wesentlich Neue der erfindungsgemäßen Lösung ist, daß nunmehr der elektrische Grundparameter, nämlich die elektrische Leitfähigkeit im Gebirge und/oder in Baumaterialien direkt gemessen werden kann, da die Übergangswiderstände zwischen den Elektroden A, B und dem sie umgebenden Medium nicht in die Auswertung eingehen.

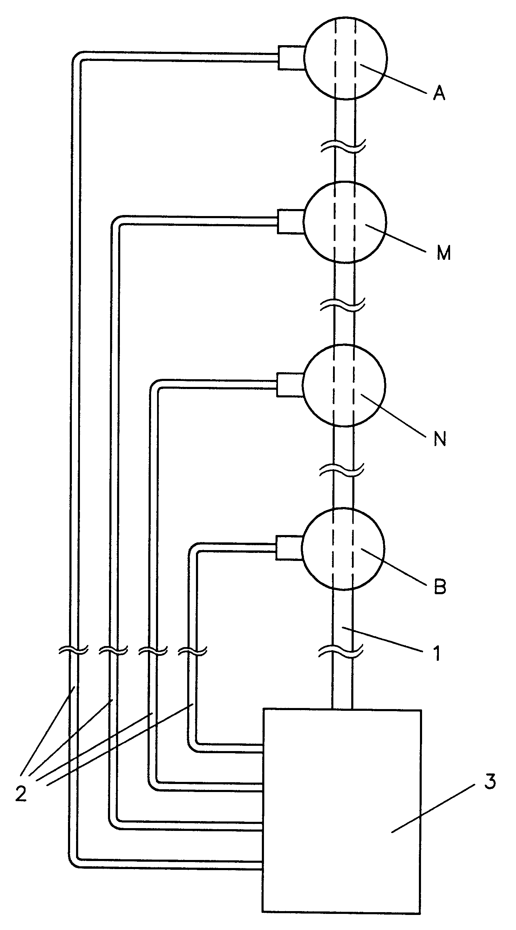

Die Erfindung wird im folgenden anhand eines Ausführungsbeispiels und der Figur näher erläutert.

Die Figur zeigt das Schema eines Leitfähigkeitssensors.

Der Sensor besteht aus vier Kugelelektroden M, N, B mit einem Durchmesser von 2 cm, die jeweils in 10 cm Abstand zueinander angeordnet sind. Die Größe der Kugelelektroden ist angesichts der Übergangswiderstände, der zu benutzenden Einspeisespannung, der zu erreichenden Stromstärken und dem zu messenden Leitfähigkeitsbereich optimiert. Eine Toleranz der Dimensionen von 10 % ist möglich. Die Kugelelektroden A, M, N, B sind durch einen durch die Elektroden durchgehenden Glasfaserstab 1 mit 4,5 mm Durchmesser mechanisch fixiert. Die einzelnen Kabel 2 zu den Elektroden A, M, N, B sind seitlich abgeführt. Sowohl die Kabel 2 als auch der Glasfaserstab 1 führen in einen Sockel 3. Der ganze Sensor ist durch Schrumpfschläuche und Vergußmaterial (hier nicht dargestellt) hermetisch isoliert, so daß keine Lauge eindringen und zu Kurzschlüssen führen kann. Die Leitfähigkeitssensoren können in das Baumaterail direkt während des Baus mit eingebaut werden. Im Gebirge oder nachträglich in Baumaterialien können Bohrlöcher zur Installation benutzt werden, die mit geeigneten Materialien, z. B. Beton oder Salzbeton zementiert sein müssen. Sensoranbringung durch rein mechanische Druckkopplung reicht für eine meßbare Stromspeisung nicht aus.

Die Aufgabe, die Leitfähigkeit in einem Gebirge oder Bauwerk zu messen wird dadurch gelöst, daß in einer Anordnung von vier Elektroden über zwei Elektroden A und B in das Material Strom eingespeist bzw. ein elektrisches Feld aufgebaut wird und an weiteren zwei Elektroden M und N das elektrische Feld bzw. die Spannung gemessen wird. Demnach kann die elektrische Leitfähigkeit berechnet werden mit:

$$\sigma = \frac{1}{4\pi} \frac{I}{\Delta V} G$$

mit

$\sigma$ = elektrische Leitfähigkeit (S/m)

I = durch die Elektroden A und B eingespeister Strom (A)

V = über die Elektroden M und N gemessene Spannung (V)

G = Geometriefaktor (1/m)

$$G = \frac{1}{r_{AM}} - \frac{1}{r_{AN}} - \frac{1}{r_{BM}} + \frac{1}{r_{BN}}$$

$r_{AM}$ = Abstand der Elektroden A und M

$r_{AN}$ = Abstand der Elektroden A und N

$r_{BM}$ = Abstand der Elektroden B und M

$r_{BN}$ = Abstand der Elektroden B und N.

Dieser Rechnung liegt zugrunde, daß im umgebenden Bereich der gesamten Elektrodenanordnung die Leitfähigkeit homogen ist. Durch Installation bedingte Abweichungen hiervon müssen gesondert berücksichtigt werden.

Sehr günstig ist eine Elektrodenanordnung mit vier Elektroden in einer Reihe jeweils mit einem Abstand von a, wobei die Stromspeiseelektroden A und B außen und Spannungselektroden M und N innen sind. Dadurch reduziert sich die Rechnung der Leitfähigkeit zu

$$\sigma = \frac{1}{4\pi} \frac{I}{\Delta V} \frac{1}{a}$$

Die Anwendung dieser Art der Leitfähigkeitsberechnung im Gebirge und Bauwerken wird mit dem Sensor ermöglicht.

Die Messung mit dem Leitfähigkeitssensor erfolgt über speziell hergerichtete Meßkanäle. Für die Einspeisespannung wird ein Konstantstrom-Sinusoszillator mit 10 Hz im Bereich von 0.2 V bis 20 V benutzt, durch welchen den beiden Elektroden A, B ein konstanter Strom aufgeprägt wird. Für die Messung muß Wechselstrom benutzt werden, damit Verfälschungen wegen Polarisationsefekt an den Elektroden vermieden werden. Einstellbar sind über einen BDC-Schalter Einspeiseströme von 0.001, 0.01, 0.1, 1 oder 10 mA. Abhängig von dem Gesamtwiderstand, der aus den Ubergangswiderständen und dem Widerstand des Gebireges und/oder des Baumaterials zusammengesetzt ist, stellt sich eine Versorgungs- oder Einspeisespannung ein. Liegt die Einspeisespannung unter 0.4 V, so sollte der nächst höhere Strombereich gewählt werden. Bei Einspeisespannungen über 20 V sollte der nächst niedere Strombereich gewählt werden. Durch die verfügbaren Strombereiche wird angenähert ein Leitfähigkeitsbereich von 1 S/m bis $10^{-7}$ S/m bedeckt. Dieser Leitfähigkeitsbereich ist bei der Durchfeuchtung mit Lauge (gesättigter Salzlösung) zu erwarten.

Die durch die Einspeisespannung sich über den inneren Elektroden einstellende Spannung wird stromlos gemessen, z. B. nachdem sie durch einen Gleichrichter umgewandelt wird. Hierbei handelt es sich um einen aktiven Präzisions-Vollweggleichrichter. Als Eingangswiderstand wird ein Impedanzwandler verwendet, um den angeschlossenen Leitfähigkeitssensor nicht zu belasten. Es sind zwei Eingangsbereiche vorhanden, die vom 0 V bis zu 2 V oder bis zu 20 V gehen und automatisch gewählt werden. Das Ausgangssignal kann wahlweise 0 bis 2 V oder 0 bis 20 mA betragen.

Prinzipiell reicht zur Erfassung der Leitfähigkeit die Kenntnis von Einspeisestrom und der Spannung auf den inneren Elektroden. Die Genauigkeit wird durch Einrichtung von Kontrollmeßstellen erhöht. Durch eine Meßstelle wird der Null-Punkt des Gleichrichters kontrolliert, womit sowohl die Messung der Einspeisespannung als auch die Spannung an den inneren Elektroden korrigiert werden kann. Eine weitere Kontrollmeßstelle überprüft den Spannungsabfall an definierten Testwiderständen um den genauen durch den Oszillator gegebenen Strom zu erfassen.

**Patentansprüche**

1.  Sensor zur Erfassung der elektrischen Leitfähigkeit mit vier linear und symmetrisch zu einem gedachten Mittelpunkt angeordneten Elektroden, von denen die beiden äußeren Elektroden der Stromeinspeisung und die beiden inneren Elektroden der Erfassung des durch diesen Strom erzeugten elektrischen Feldes dienen, dadurch gekennzeichnet, daß

    a) die Elektroden (A, B, M, N) kugelförmig ausgebildet sind,

    b) der Abstand A - B 15 bis 60 cm beträgt, wobei

    c) der Abstand M - N ein Drittel bis ein Fünftel des Abstandes A - B beträgt und

    d) das Verhältnis vom Abstand benachbarter Elektroden zum Kugeldurchmesser zwischen 4,5 und 10 liegt.

2.  Sensor nach Anspruch 1, dadurch gekennzeichnet, daß die Ab-stände zwischen benachbarten Elektroden alle gleich sind.

3.  Sensor nach Anspruch 1 oder 2, dadurch gekennzeichnet, daß das Verhältnis von Elektrodenabstand zu Kugeldurchmesser zwischen 5 und 6 liegt.

4.  Sensor nach Anspruch 1 oder 2, dadurch gekennzeichnet, daß die Elektrodenabstände 10 ± 1 cm betragen.

5.  Sensor nach Anspruch 4, dadurch gekennzeichnet, daß der Durchmesser für alle Elektroden gleich ist und zwischen 1,8 und 2,2 cm liegt.

6.  Verfahren zur Erfassung der elektrischen Leitfähigkeit im Gebirge und in Bauwerken unter Verwendung eines Sensors gemäß einem der Ansprüche 1 bis 5, gekennzeichnet durch folgende Verfahrensschritte:

    a) einzementieren des Sensors im Gebirge oder Bauwerk,

    b) Aufprägen eines niederfrequenten konstanten Stromes mit den möglichen Stromstärken 0,001 bis 0,01, 01, 1 und 10 mA auf die beiden Elektroden A, B, wobei dann zur Messung derjenige Wert eingestellt wird, für den die benötigte Spannung etwa in der Mitte zwischen 0,2 und 20 Volt liegt,

    c) bei diesem Strom wird dann der Spannungsabfall über den Elektroden M, N stromlos gemessen und

    d) daraus die Leitfähigkeit des von dem Strom durchflossenen Bereiches bestimmt,

    e) bei weiteren Messungen wiederholen ab Schritt b).

**Europäisches Patentamt**

# EUROPÄISCHER RECHERCHENBERICHT

Nummer der Anmeldung

EP 94 10 1697

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | GB-A-2 156 084 (TAYLOR WOODROW CONSTRUCTION LIMITED)<br>* Seite 2, Zeile 4 – Zeile 17 *<br>* Seite 2, Zeile 55 – Zeile 58; Abbildung 1 * | 1,2,6 | G01R27/14<br>G01N27/04<br>G01N33/24 |
| A | BRITISH JOURNAL OF NON DESTRUCTIVE TESTING,<br>Bd.33, Nr.2, Februar 1991, NORTHAMPTON GB<br>Seiten 59 – 63<br>MILLARD ET AL 'PRACTICAL MEASUREMENT OF CONCRETE RESISTIVITY'<br>* Seite 59, linke Spalte; Abbildungen 1,2 * | 1,2,6 | |
| A | PATENT ABSTRACTS OF JAPAN<br>vol. 9, no. 203 (P-381) (1926) 21. August 1985<br>& JP-A-60 066 153 (SHINTO KOGYO) 16. April 1985<br>* Zusammenfassung * | 1 | |
| A | US-A-4 524 319 (EBERLING ET AL.)<br>* Zusammenfassung; Abbildung 5 * | 1 | **RECHERCHIERTE SACHGEBIETE (Int.Cl.5)**<br>G01R<br>G01N |
| A | US-A-3 840 806 (STONER ET AL)<br>* Spalte 6, Zeile 7 – Zeile 30; Abbildung 2 * | 1 | |

Der vorliegende Recherchenbericht wurde für alle Patentansprüche erstellt

| Recherchenort | Abschlußdatum der Recherche | Prüfer |
|---|---|---|
| DEN HAAG | 23. September 1994 | Iwansson, K |